# EUROPEAN PATENT APPLICATION

(11) **EP 4 379 691 A1**
(43) Date of publication of application: **05.06.2024**
(21) Application number: 23213225.8
(22) Date of filing: 30.11.2023
(51) Int. Cl.: G08B 7/06, G01S 5/02, G08B 25/01, G08B 25/00

(54) **BEACON ASSISTED EMERGENCY PERSONNEL LOCATION SYSTEM AND METHOD**

(30) Priority: 02.12.2022 US 202263385778 P
(71) Applicant: 3M Innovative Properties Company, Saint Paul, MN 55133-3427 (US)
(72) Inventor: Thompson, Darin K., St. Paul, Minnesota, 33427 (US); Kloc, Longin J., St. Paul, Minnesota, 33427 (US); Morar, Traian, St. Paul, Minnesota, 33427 (US); Howell, William B., St. Paul, Minnesota, 33427 (US); Sabacinski, Richard J., St. Paul, Minnesota, 33427 (US); DeMeo, Dana C., St. Paul, Minnesota, 33427 (US); Myers, Brian C., St. Paul, Minnesota, 33427 (US)
(74) Representative: Bergen, Katja

(57) **Abstract**

A communications system for emergency personnel comprising a plurality of beacons disposed in a building or large structure, wherein each beacon is placed in a location such that it can communicate with at least its next nearest beacon when activated and/or nearby emergency personnel. Each beacon comprises a low power consumption PCBA, a battery, and a housing. Each beacon is installed in the building or large structure prior to a disaster incident or emergency event.

## Description

### Cross Reference to Related Applications

This application claims priority from US Provisional Application Serial No. 63/385778, filed 2 December 2023, the disclosure of which is incorporated by reference in its/their entirety herein.

### Field

The invention relates generally to a beacon assisted network and communication system used by emergency personnel to help provide navigation and/or location information in a building or structure, especially during an emergency event.

### Background

Locating emergency personnel, such as emergency responders and firefighters, within a structure or building can be problematic. Building structures, equipment and materials can prevent a wireless signal from creating an accessible or adequate wireless network after an emergency event, such as a power shutdown to the building.

Firefighter or other emergency/first response personnel systems with combination location/tracking, electronics and sensor monitoring indoors/outdoors can be helpful in emergencies. It is very desirable for an incident commander to be in contact with his/her personnel and to monitor their location, the electronic sensors and the electro-mechanical equipment they carry with tracking capabilities at the scene of an emergency. Conventional systems have relied on personnel arriving at the scene of an emergency and deploying temporary stationary transceivers, such as beacons, repeaters and antennas, inside and outside a building or structure in order to relay information to a central base station. The deployment of these stationary transceivers is necessary to relay information to/from personnel in the building. Further, the stationary transceivers are sometimes used to triangulate the personnel's location.

However, traditional stationary transceivers are large, heavy and require large amounts of power. Additionally, stationary transceivers, once deployed, are difficult to recover or find after the emergency is over, because stationary transceivers are typically lost or destroyed by the firefighters, emergency, or military personnel on the scene. Further, deployment of such stationary transceivers is time consuming and is often not practical under typical emergency circumstances.

### Summary of the Invention

In view of the above, there is still a need for improved communications within a building or other structure during an emergency.

The present invention provides a communications system for emergency personnel comprising a plurality of beacons disposed in a building or large structure, wherein each beacon is placed in a location such that it can communicate with at least its next nearest beacon when activated and/or nearby emergency personnel. Each beacon comprises a low power consumption PCBA, a battery, and a housing. Each beacon is installed in the building or large structure prior to a disaster incident or emergency event.

### Brief Description of the Drawings

Further features, embodiments, and advantages of the present invention will become apparent from the following detailed description with reference to the drawings.
FIG. 1 is schematic view of a beacon according to a first aspect of the disclosure.
FIG. 2 is a schematic view of a floorplan showing installed beacons according to another aspect of the disclosure.
FIG. 3 is a schematic view of a temporary use beacon according to another aspect of the disclosure.

### Detailed Description

Referring now to the drawings, in which like numerals represent like components throughout the several views, embodiments of the present invention are next described. The following description of the embodiment(s) is merely exemplary in nature and is in no way intended to limit the invention, its application, or uses.

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises", and variations thereof, do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, and vertical may be used herein and, if so, are from the perspective observed in the particular figure. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention.

An embodiment of the present invention provides a communications system for emergency personnel. The system comprises a plurality of beacons disposed in a building or large structure. In one aspect, each beacon is placed in a location (usually within the building or large structure, such as a manufacturing facility or office building) such that it can communicate with at least its next nearest beacon when activated and/or nearby emergency personnel. As will be described in further detail herein, the majority, and in some cases all, of the beacons are installed in the building or large structure prior to a disaster incident or emergency event.

In a general aspect, a beacon is a communication device that can transmit and/or receive communication signals, such as radio frequency (RF) signals, or other wireless technology-related signal protocols, such as LoRa, ZigBee or ZWave. When multiple beacons are utilized, a mesh network can be created, whereby emergency personnel within the building or structure can communicate outside of the building or structure, e.g., to an incident commander present at the scene of the disaster incident or emergency event. In this case, each beacon becomes a communication node of the mesh network.

In one aspect, each beacon of the communication system described herein can comprise a low power consumption printed circuit board assembly (PCBA), a battery, and a housing. The PCBA can include a transceiver or RF module configured to send and receive communication signals.

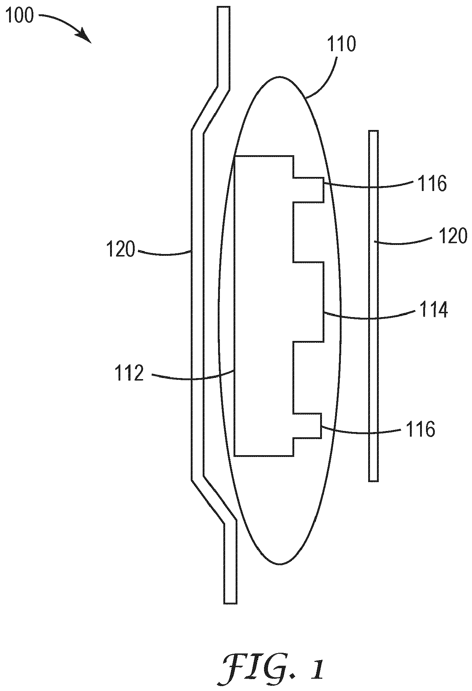

Fig. 1 shows an exemplary beacon 100 according to an aspect of the invention. Beacon 100 includes a housing 110. The housing can be formed from a conventional housing material, such as a plastic (e.g., a filled material, a high-temperature material, a thermoplastic material, or a thermoset plastic material), carbon fiber, or a metal. The beacons themselves can have a variety of formfactors. In some aspects, the housing can be a low-profile housing.

Beacon 100 can further include PCBA 112 that is configured to transmit and/or receive communication signals, via an RF module or the like. In this aspect, PCBA includes one or more antennas, such as integrated antennas, board antennas, chip antennas and/or diverse antennas. As mentioned above, the PCBA 112 can be configured to communicate via standard short-range wireless protocols, such as LoRa, ZigBee or ZWave, that are low power consuming, and can be powered from a battery. In one aspect, the PCBAs would be a custom design to match the appropriate form factor.

Beacon 100 can further include a battery 114, as a primary or a back-up power source. In one aspect, battery 114 is a low power battery, such as a conventional Li-ion battery, or the like. In an alternative embodiment, a beacon can be hard-wired and powered via a building or other device's power supply.

In addition, beacon 100 can further include one or more sensors 116 that detect the presence of a nearby communication source (such as a portable transceiver located on an emergency responder, such as may be included on the self-contained breathing apparatus (SCBA), a personal alert safety system (PASS) device or a hand-held receiver of a firefighter/emergency responder). In one example, such portable transceivers can be integrated with the SCBA and may also include additional components to provide on-board personal system data related to the equipment worn by the emergency responder. The on-board system data can provide information related to the SCBA, status, environmental information, and the like. An example portable communication system for emergency personnel that is integrated with PPE is described in US Pat. No. 9,257,028, incorporated by reference herein in its entirety.

Each beacon can have a 'sleep' mode and an active mode. In the sleep mode, a beacon can wirelessly ping/listen for an activating signal - when triggered/activated, the beacon can shift from the sleep mode to the active mode in order to transmit/communicate signals to and from the nearby responder and/or to/from other nearby beacons or power up the mesh network of beacons. In general use, the beacon(s) remain in sleep mode to conserve battery power/extend service life. The beacons periodically wake up and listen for commands from an SCBA and/or handheld unit used to setup, test or activate a unit or units/system. As such, the beacon 100 will remain in a sleep mode, conserving battery, periodically waking up and listening for an SCBA in use (powered up/on) when an emergency responder comes in proximity.

Beacon 100 can also include a fastener, such as adhesive 120, such as a pressure sensitive adhesive or other conventional adhesive, that facilitates the beacon 100 to be easily installed at any number of different locations within a building, such as near fire extinguishers, fire alarms, air ducts/filters, walls, standpipes, sprinkler control panels, or other building infrastructure. Alternatively, the beacons described herein can be embedded and powered by a hard-wired device, such as a smoke detector, exit sign, CO/gas monitor, or entry/access panel.

The low cost, low power wireless beacons with meshing capability can be placed in a building/structure/facility during a pre-planning event, such as a yearly inspection. For example, during a yearly fire inspection, a plurality of beacons can be installed at strategic building locations, such as next to fire alarms, fire hydrants, or other locations, depending on the building/floor layout. In an alternative aspect, beacon 100 can be configured to include a lanyard or other similar structure to allow the beacon to be hung from various fixtures such as the neck of a fire extinguisher, door handle, or wall mount. Beacon locations can be determined using a hand-held receiver or diagnostic tool to insure wireless coverage over the particular floor plan/building layout. Greater or fewer beacons may be installed depending on internal building materials, equipment and other internal structures/floor layouts, which can impact signal strength and/or range (e.g., connectivity between beacons). Communication system integrity can be tested during the inspection.

During subsequent or follow-up inspections, mesh network quality and system integrity (e.g., battery levels) can be further tested, e.g., such as by using a mobile/hand-held device or wireless signal detector, and the network can be modified if needed.

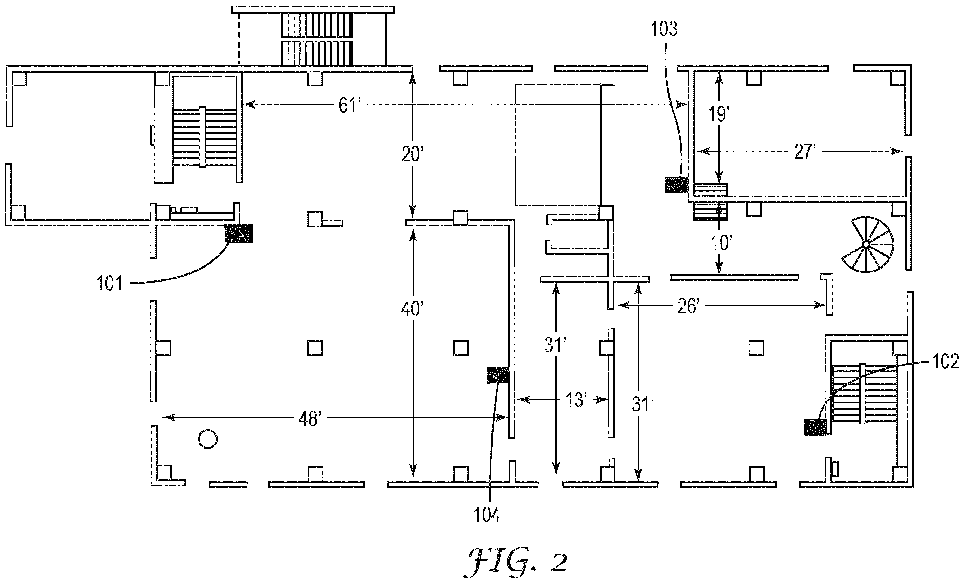

Fig. 2 shows an exemplary floor plan that can be utilized and modified to indicate locations of installed beacons on building floors/areas. These floor plans can be electronically stored and then accessed by an incident commander during an emergency event to improve the ability to identify, locate and communicate with emergency personnel. Each beacon can have a unique identifier (ID) so that an incident commander can locate the exact location of emergency personnel based on proximity to a particular beacon. Preferred beacon mounting locations can be determined based on floor plan/building material/structure factors. For example, as shown in Fig. 2, beacons 101, 102, 103 can be placed at or near entrance/exit locations (e.g., stairwells/doorways) and near interior walls (see e.g., beacon 104), which may reduce overall signal strength (depending on the construction materials used). Line of sight spacings can be utilized in some aspects of the disclosure. Beacons can also be placed near hazards (such as particular chemical storage areas or compressed gasses) within the building that may need to be checked first or avoided by emergency responders during an emergency event.

In another aspect, beacon mounting locations can be modified during a subsequent yearly inspection, which may be necessitated by new/different structures or equipment being placed on a particular floor that can impact signal integrity between nearby beacons. For example, recently installed large equipment can block line of sight, or create communication interference between current or previously placed beacons.

In operation, during an emergency event (i.e., fire), the on-scene firefighters will arrive and turn on their SCBAs. As the firefighters enter the structure, they walk nearby (in proximity to) a beacon/node. The beacon/node will automatically "wake up" from its sleep mode and activate the previously installed mesh network. In addition, the beacon can start transmitting a signal that provides a location and/or a unique identifier. This network will provide waypoints for the firefighters for use in location/positioning and egression (personnel if lost) or extraction. These nodes can connect with the SCBA and other apparatus on scene (such as the incident commander's gateway, communication drones, and/or other temporary nodes (as will explained further below)) to extend the communication between the firefighter and the incident commander (IC).

For example, the information provided by a beacon can inform the firefighter and/or incident commander that a particular beacon is located by a stairwell, support structure, elevator shaft, stand pipe, doorway, or exit, thereby helping the firefighter determine proper direction/course of action.

In another aspect of the disclosure, an optional wall powered beacon/node can be included in the system. This "master" beacon/node can allow the mesh network to have connectivity to Wi-Fi and/or LTE/Cellular technology to provide alternative methods to send data out during an event and/or be used to remotely perform a status check or to update firmware. If the system has a master node/beacon installed, the mesh network can be activated when a fire alarm is activated and/or remotely while the emergency personnel are en route. Such wall powered beacon/nodes can include a battery as a back-up power supply.

Sometimes fires or other events can damage and/or reduce the signal strength/quality of a pre-installed beacon network. In order to repair or strengthen this network, additional or supplementary temporary use beacons can be installed at the building/facility during an event. In one further aspect of the invention, emergency personnel on the scene of an emergency event can install at least one reusable, temporary use beacon that can be utilized in addition to the beacon mesh network described above. Alternatively, one or more temporary use beacons can operate over a different frequency or communication protocol to provide emergency personnel with an additional, separate communication network at the building or large structure.

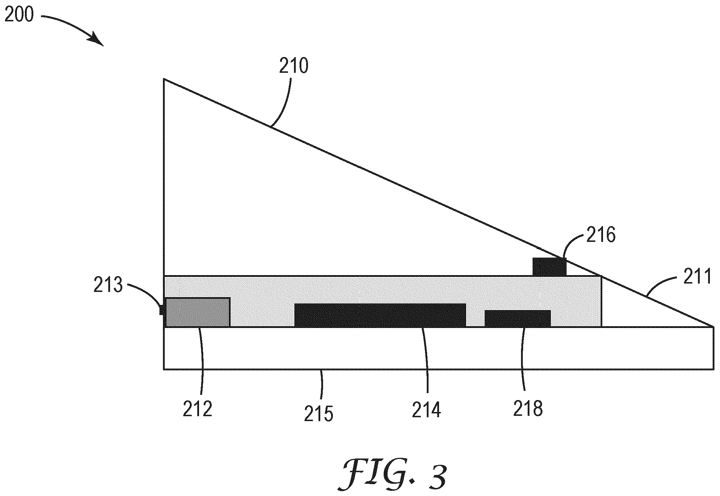

Fig. 3 shows an example temporary use beacon 200 configured with a wedge-shaped housing 210. In this example, temporary use beacon 200 is configured to be placed as a door stop, where temporary use beacon 200 is activated upon pressure placed on a major surface 211 of the wedge-shape by a door contacting the major surface 211. For example, temporary use beacon 200 can include a sensor or pressure detector 216 disposed in close proximity to the angled, major surface 211. With this wedge-shaped design shown in Fig. 3, the major surface 211 can be hinged or designed with a thinner wall to more easily activate under pressure from door contact on surface 211 to power on/activate the temporary use beacon 200. Alternatively, a pressure sensor/detector can be located on another major surface of the wedge, e.g., bottom surface 215, and will be triggered upon pressure placed by a door contacting beacon 200. Other shapes can be utilized for temporary use beacons in accordance with the present description. For example, in an alternative aspect, beacon 200 can be configured to include a lanyard or other similar structure to allow the beacon to be hung from various fixtures such as the neck of a fire extinguisher, door handle, or wall mount. Activation can also be accomplished manually.

In addition, temporary use beacon 200 can include a battery 212 (such as those described above) and a PCBA 214 that includes a transceiver/antenna/RF module as noted above. Temporary use beacon is a reusable beacon that is configured to be rechargeable (either via charging cord placed in charge port 213 or wirelessly). As such, temporary use beacon 200 can further include a small piezo device or speaker 218 to emit an audible sound to create a pathway in/out of the building/structure and also for easy retrieval by emergency personnel once the emergency situation is under control.

Further, once activated, the temporary use beacon 200 can remain in an active mode for a predetermined period of time (e.g., 60 or 90 minutes) in the event that the pressure sensor 216 is released (e.g., if a door releases from its open position or the wedge-shaped beacon is knocked loose from it activated position). In addition, other outer surfaces of temporary use beacon 200 can be implemented with antennas to increase signal transmission/reception.

In a further alternative aspect, one or more temporary use beacons can be dispensed and activated by an automatic temporary use beacon dispenser attached to the equipment of one or more emergency responders. For example, a dispenser, such as a tube-shaped structure, can be built onto or into SCBA gear. In this example, an emergency responder may dispense a temporary use beacon via a push button or other release mechanism. Alternatively, the temporary use beacons can be dispensed automatically.

For example, as an emergency responder travels through a building/facility during an emergency event, a controller device coupled to the SCBA can be configured with memory to store and execute an algorithm indicating to the emergency responder to dispense a temporary use beacon, or automatically dispense the temporary use beacon. This algorithm can analyze information such as time, signal strength of nearby beacons, and other external data to optimize an existing beacon network. In this manner, a grid of supplementary beacons can be used to boost the coverage of an existing beacon network to further optimize system locating ability. These temporary use supplemental beacons can be shaped as balls or blocks such that they can be easily stored, activated, and dispensed by the automatic temporary use beacon dispenser. These temporary use beacons can include a battery and PCBA, such as those described above.

Thus, according to the invention, a pre-installed communication network of beacons can be utilized to provide important location and identity information related to emergency personnel on the scene of an emergency event. Further, one or more temporary use beacons can also be employed to bolster an existing communication network or provide a separate communication network from the pre-installed beacon network.

All cited references, patents, and patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

## Claims

1. A communications system for emergency personnel, the system comprising:
a plurality of beacons disposed in a building or large structure, wherein each beacon is placed in a location such that it can communicate with at least its next nearest beacon when activated and/or nearby emergency personnel,
wherein each beacon comprises a low power consumption PCBA, a battery, and a housing,
wherein each beacon is installed in the building or large structure prior to a disaster incident or event.

2. The system of claim 1, wherein each beacon is activated upon the presence of a nearby emergency responder.

3. The system of claim 1, further comprising one or more temporary use beacons.

4. The system of claim 3, wherein the one or more temporary use beacons comprises at least one temporary use beacon disposed in a wedge-shaped housing configured to be placed as a door stop, wherein the at least one temporary use beacon is activated upon pressure placed on a major surface of the wedge-shaped by a door contacting at least one major surface.

5. The system of claim 3, wherein the one or more temporary use beacons comprises beacons dispensed and activated by an automatic temporary use beacon dispenser attached to one or more emergency responders.

6. The system of claim 1, wherein the housing comprises a low-profile housing.

7. The system of claim 1, wherein one or more of the plurality of beacons comprise an adhesive backing to secure a beacon at a particular location in the building or large structure.

8. The system of claim 4, wherein each of the one or more temporary use beacons further comprises a piezo device or speaker to emit audible sounds.

9. The system of claim 1, wherein each beacon is assigned a unique identifier.

10. A method of installing a communications system for emergency personnel in a building or structure, comprising:
providing a plurality of beacons, wherein each beacon comprises a low power consumption PCBA, a battery, and a housing; and
disposing each beacon in the building or large structure, wherein each beacon is placed in a location such that it can communicate with at least its next nearest beacon when activated and/or nearby emergency personnel, wherein each beacon is installed in the building or large structure prior to a disaster incident or emergency event.

11. The method of claim 10, further comprising indicating, on a floorplan or map of the building or large structure, the location of each beacon, to produce an annotated map.

12. The method of claim 11, wherein the annotated map is stored such that it is accessible by an incident commander during the disaster incident or emergency event.

13. The method of claim 10, further comprising dispensing one or more temporary use beacons in the building or large structure during the disaster incident or emergency event, wherein the one or more temporary use beacons bolster the existing beacon network.

14. The method of claim 13, wherein the temporary use beacons operate in the same communication frequency or protocol as the plurality of beacons to create a single communication network comprising the plurality of beacons and the temporary use beacons.

15. The method of claim 13, wherein the temporary use beacons operate in a different communication frequency or protocol as the plurality of beacons to create two separate communication networks, with a first communication network comprising the plurality of beacons and a second communication network comprising the temporary use beacons.
